# EUROPEAN PATENT APPLICATION

(11) **EP 4 129 794 A1**
(43) Date of publication of application: **08.02.2023**
(21) Application number: 22168439.2
(22) Date of filing: 14.04.2022
(51) Int. Cl.: B60W 50/06, G06F 9/48, G06F 9/50

(54) **VEHICULAR CONTROL ASSISTANCE SYSTEM AND METHOD**

(30) Priority: 06.08.2021 GB 202111349
(71) Applicant: Continental Autonomous Mobility Germany GmbH, 85057 Ingolstadt (DE)
(72) Inventor: Kulkarni, Sushant, 339780 Singapore (SG); Bhope, Pratik Prashant, 339780 Singapore (SG)
(74) Representative: Continental Corporation

(57) **Abstract**

A vehicular control assistance system (100) comprising: a vehicular control assistance function module (120) comprising a first vehicular control assistance function algorithm (122); and a vehicular control assistance function priority setter (130) configured to set a priority level for the first vehicular control assistance function algorithm (122) based on dynamic vehicular environment information.

## Description

### FIELD OF THE INVENTION

The invention relates to a vehicular control assistance system, particularly a vehicular control assistance system for a motor vehicle, and a corresponding vehicular control assistance method.

### BACKGROUND

Vehicular control assistance systems are designed to help drivers during driving. A vehicular control assistance system may comprise several software algorithms configured to perform vehicular control assistance functions in order to assist a driver. However, a lot of computer processing resources may be required to run these software algorithms.

### SUMMARY

An objective is to provide a vehicular control assistance system or a vehicular control assistance method that may ameliorate negative effects of the problems of the prior art.

According to a first aspect of the invention, there is provided a vehicular control assistance system comprising: a vehicular control assistance function module comprising a first vehicular control assistance function algorithm; and a vehicular control assistance function priority setter configured to set a priority level for the first vehicular control assistance function algorithm based on dynamic vehicular environment information.

One advantage of the vehicular control assistance system is that computer processing resources may be reserved for or allocated to a vehicular control assistance function algorithm that would be more helpful at a particular time instant or in a certain situation based on the dynamic vehicular environment information.

Moreover, the vehicular control assistance system is distinguishable from a device that is configured to, for example, allocate more computer processing resources to a reverse braking assist function algorithm when a reverse gear is engaged. In fact, the device is merely pre-programmed to allocate more computer processing resources to a reverse braking assist function algorithm when a reverse gear is engaged, and thus no dynamic vehicular environment information is taken into account. Hence, the device would not achieve the advantage of the vehicular control assistance system.

Optionally, the vehicular control assistance function priority setter is configured to set the priority level for the first vehicular control assistance function algorithm based on dynamic vehicular map information.

Hence, advantageously, computer processing resources may be reserved for or allocated to a vehicular control assistance function algorithm that would be more helpful at a particular time instant or in a certain situation based on the dynamic vehicular map information.

Optionally, the vehicular control assistance function priority setter is configured to set the priority level for the first vehicular control assistance function algorithm based on dynamic vehicular localisation information.

Hence, advantageously, computer processing resources may be reserved for or allocated to a vehicular control assistance function algorithm that would be more helpful at a particular time instant or in a certain situation based on the dynamic vehicular localisation information.

Optionally, the vehicular control assistance function priority setter is configured to set the priority level for the first vehicular control assistance function algorithm based on dynamic vehicular environment weather information.

Hence, advantageously, computer processing resources may be reserved for or allocated to a vehicular control assistance function algorithm that would be more helpful at a particular time instant or in a certain situation based on the dynamic vehicular environment weather information.

Optionally, the vehicular control assistance function priority setter is configured to set the priority level for the first vehicular control assistance function algorithm based on dynamic vehicular environment sensor information.

Hence, advantageously, computer processing resources may be reserved for or allocated to a vehicular control assistance function algorithm that would be more helpful at a particular time instant or in a certain situation based on the dynamic vehicular environment sensor information.

Optionally, the vehicular control assistance function priority setter is configured to set the priority level for the first vehicular control assistance function algorithm based on at least one of: dynamic vehicular map information; dynamic vehicular localisation information; dynamic vehicular environment weather information; or dynamic vehicular environment sensor information.

Hence, advantageously, computer processing resources may be reserved for or allocated to a vehicular control assistance function algorithm that would be more helpful at a particular time instant or in a certain situation based on at least one of the dynamic vehicular map information, the dynamic vehicular localisation information, the dynamic vehicular environment weather information or the dynamic vehicular environment sensor information.

Optionally, the vehicular control assistance function module comprises a second vehicular control assistance function algorithm; and the vehicular control assistance function priority setter is configured to set a priority level for the second vehicular control assistance function algorithm based on the dynamic vehicular environment information.

Hence, advantageously, computer processing resources may be reserved for or allocated to a vehicular control assistance function algorithm that would be more helpful at a particular time instant or in a certain situation based on the dynamic vehicular environment information.

Optionally, the vehicular control assistance function priority setter is configured to set the first vehicular control assistance function algorithm and the second vehicular control assistance function algorithm in order of priority relative to one another based on the dynamic vehicular environment information.

Hence, advantageously, computer processing resources may be reserved for or allocated to a vehicular control assistance function algorithm that would be more helpful at a particular time instant or in a certain situation based on the dynamic vehicular environment information.

Optionally, the vehicular control assistance function priority setter is configured to set the priority level for the second vehicular control assistance function algorithm based on at least one of: the dynamic vehicular map information; the dynamic vehicular localisation information; the dynamic vehicular environment weather information; or the dynamic vehicular environment sensor information.

Hence, advantageously, computer processing resources may be reserved for or allocated to a vehicular control assistance function algorithm that would be more helpful at a particular time instant or in a certain situation based on at least one of the dynamic vehicular map information, the dynamic vehicular localisation information, the dynamic vehicular environment weather information or the dynamic vehicular environment sensor information.

A motor vehicle may comprise the vehicular control assistance system.

Any feature or step disclosed in the context of the first aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the first aspect of the invention, and in the inventions generally.

According to a second aspect of the invention, there is provided a vehicular control assistance system comprising: a vehicular control assistance function module comprising a first vehicular control assistance function algorithm; and a vehicular control assistance function priority setter configured to set a priority level for the first vehicular control assistance function algorithm based on dynamic vehicular environment information; wherein: the vehicular control assistance function module comprises a second vehicular control assistance function algorithm; and the vehicular control assistance function priority setter is configured to set a priority level for the second vehicular control assistance function algorithm based on the dynamic vehicular environment information; wherein the vehicular control assistance function priority setter is configured to set the first vehicular control assistance function algorithm and the second vehicular control assistance function algorithm in order of priority relative to one another based on the dynamic vehicular environment information; wherein the vehicular control assistance function priority setter is configured to set the priority level for the first vehicular control assistance function algorithm based on at least one of: dynamic vehicular map information; dynamic vehicular localisation information; dynamic vehicular environment weather information; or dynamic vehicular environment sensor information; and wherein the vehicular control assistance function priority setter is configured to set the priority level for the second vehicular control assistance function algorithm based on at least one of: the dynamic vehicular map information; the dynamic vehicular localisation information; the dynamic vehicular environment weather information; or the dynamic vehicular environment sensor information.

One advantage of the vehicular control assistance system is that computer processing resources may be reserved for or allocated to a vehicular control assistance function algorithm that would be more helpful at a particular time instant or in a certain situation based on the dynamic vehicular environment information.

In addition, advantageously, computer processing resources may be reserved for or allocated to a vehicular control assistance function algorithm that would be more helpful at a particular time instant or in a certain situation based on at least one of the dynamic vehicular map information, the dynamic vehicular localisation information, the dynamic vehicular environment weather information or the dynamic vehicular environment sensor information.

Moreover, the vehicular control assistance system is distinguishable from a device that is configured to, for example, allocate more computer processing resources to a reverse braking assist function algorithm when a reverse gear is engaged. In fact, the device is merely pre-programmed to allocate more computer processing resources to a reverse braking assist function algorithm when a reverse gear is engaged, and thus no dynamic vehicular environment information is taken into account. Hence, the device would not achieve the advantage of the vehicular control assistance system.

Any feature or step disclosed in the context of the second aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the second aspect of the invention, and in the inventions generally.

According to a third aspect of the invention, there is provided a vehicular control assistance method comprising the acts of: receiving dynamic vehicular environment information; providing a first vehicular control assistance function algorithm; and setting a priority level for the first vehicular control assistance function algorithm based on the dynamic vehicular environment information received.

One advantage of the vehicular control assistance method is that computer processing resources may be reserved for or allocated to a vehicular control assistance function algorithm that would be more helpful at a particular time instant or in a certain situation based on the dynamic vehicular environment information received.

Moreover, the vehicular control assistance method is distinguishable from a process that would, for example, allocate more computer processing resources to a reverse braking assist function algorithm when a reverse gear is engaged. In fact, the process would merely involve allocating more computer processing resources to a reverse braking assist function algorithm when a reverse gear is engaged, and thus would not involve taking into account dynamic vehicular environment information. Hence, the process would not achieve the advantage achievable by the vehicular control assistance method.

Optionally, the act of receiving the dynamic vehicular environment information comprises the act of receiving dynamic vehicular map information; and the act of setting the priority level for the first vehicular control assistance function algorithm based on the dynamic vehicular environment information received comprises the act of setting the priority level for the first vehicular control assistance function algorithm based on the dynamic vehicular map information received.

Hence, advantageously, computer processing resources may be reserved for or allocated to a vehicular control assistance function algorithm that would be more helpful at a particular time instant or in a certain situation based on the dynamic vehicular map information received.

Optionally, the act of receiving the dynamic vehicular environment information comprises the act of receiving dynamic vehicular localisation information; and the act of setting the priority level for the first vehicular control assistance function algorithm based on the dynamic vehicular environment information received comprises the act of setting the priority level for the first vehicular control assistance function algorithm based on the dynamic vehicular localisation information received.

Hence, advantageously, computer processing resources may be reserved for or allocated to a vehicular control assistance function algorithm that would be more helpful at a particular time instant or in a certain situation based on the dynamic vehicular localisation information received.

Optionally, the act of receiving the dynamic vehicular environment information comprises the act of receiving dynamic vehicular environment weather information; and the act of setting the priority level for the first vehicular control assistance function algorithm based on the dynamic vehicular environment information received comprises the act of setting the priority level for the first vehicular control assistance function algorithm based on the dynamic vehicular environment weather information received.

Hence, advantageously, computer processing resources may be reserved for or allocated to a vehicular control assistance function algorithm that would be more helpful at a particular time instant or in a certain situation based on the dynamic vehicular environment weather information received.

Optionally, the act of receiving the dynamic vehicular environment information comprises the act of receiving dynamic vehicular environment sensor information; and the act of setting the priority level for the first vehicular control assistance function algorithm based on the dynamic vehicular environment information received comprises the act of setting the priority level for the first vehicular control assistance function algorithm based on the dynamic vehicular environment sensor information received.

Hence, advantageously, computer processing resources may be reserved for or allocated to a vehicular control assistance function algorithm that would be more helpful at a particular time instant or in a certain situation based on the dynamic vehicular environment sensor information received.

The vehicular control assistance method may further comprise the acts of: providing a second vehicular control assistance function algorithm; and setting a priority level for the second vehicular control assistance function algorithm based on the dynamic vehicular environment information received.

Hence, advantageously, computer processing resources may be reserved for or allocated to a vehicular control assistance function algorithm that would be more helpful at a particular time instant or in a certain situation based on the dynamic vehicular environment information received.

The vehicular control assistance method may further comprise the act of setting the first vehicular control assistance function algorithm and the second vehicular control assistance function algorithm in order of priority relative to one another based on the dynamic vehicular environment information received.

Hence, advantageously, computer processing resources may be reserved for or allocated to a vehicular control assistance function algorithm that would be more helpful at a particular time instant or in a certain situation based on the dynamic vehicular environment information received.

Optionally, the act of receiving the dynamic vehicular environment information comprises the act of receiving the dynamic vehicular map information; and the act of setting the priority level for the second vehicular control assistance function algorithm based on the dynamic vehicular environment information received comprises the act of setting the priority level for the second vehicular control assistance function algorithm based on the dynamic vehicular map information received.

Hence, advantageously, computer processing resources may be reserved for or allocated to a vehicular control assistance function algorithm that would be more helpful at a particular time instant or in a certain situation based on the dynamic vehicular map information received.

Optionally, the act of receiving the dynamic vehicular environment information comprises the act of receiving the dynamic vehicular localisation information; and the act of setting the priority level for the second vehicular control assistance function algorithm based on the dynamic vehicular environment information received comprises the act of setting the priority level for the second vehicular control assistance function algorithm based on the dynamic vehicular localisation information received.

Hence, advantageously, computer processing resources may be reserved for or allocated to a vehicular control assistance function algorithm that would be more helpful at a particular time instant or in a certain situation based on the dynamic vehicular localisation information received.

Optionally, the act of receiving the dynamic vehicular environment information comprises the act of receiving the dynamic vehicular environment weather information; and the act of setting the priority level for the second vehicular control assistance function algorithm based on the dynamic vehicular environment information received comprises the act of setting the priority level for the second vehicular control assistance function algorithm based on the dynamic vehicular environment weather information received.

Hence, advantageously, computer processing resources may be reserved for or allocated to a vehicular control assistance function algorithm that would be more helpful at a particular time instant or in a certain situation based on the dynamic vehicular environment weather information received.

Optionally, the act of receiving the dynamic vehicular environment information comprises the act of receiving the dynamic vehicular environment sensor information; and the act of setting the priority level for the second vehicular control assistance function algorithm based on the dynamic vehicular environment information received comprises the act of setting the priority level for the second vehicular control assistance function algorithm based on the dynamic vehicular environment sensor information received.

Hence, advantageously, computer processing resources may be reserved for or allocated to a vehicular control assistance function algorithm that would be more helpful at a particular time instant or in a certain situation based on the dynamic vehicular environment sensor information received.

Any feature or step disclosed in the context of the third aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the third aspect of the invention, and in the inventions generally.

According to a fourth aspect of the invention, there is provided a vehicular control assistance method comprising the acts of: receiving dynamic vehicular environment information; providing a first vehicular control assistance function algorithm; setting a priority level for the first vehicular control assistance function algorithm based on the dynamic vehicular environment information received; wherein: the act of receiving the dynamic vehicular environment information comprises the act of receiving dynamic vehicular map information; and the act of setting the priority level for the first vehicular control assistance function algorithm based on the dynamic vehicular environment information received comprises the act of setting the priority level for the first vehicular control assistance function algorithm based on the dynamic vehicular map information received; wherein: the act of receiving the dynamic vehicular environment information comprises the act of receiving dynamic vehicular localisation information; and the act of setting the priority level for the first vehicular control assistance function algorithm based on the dynamic vehicular environment information received comprises the act of setting the priority level for the first vehicular control assistance function algorithm based on the dynamic vehicular localisation information received; wherein: the act of receiving the dynamic vehicular environment information comprises the act of receiving dynamic vehicular environment weather information; and the act of setting the priority level for the first vehicular control assistance function algorithm based on the dynamic vehicular environment information received comprises the act of setting the priority level for the first vehicular control assistance function algorithm based on the dynamic vehicular environment weather information received; wherein: the act of receiving the dynamic vehicular environment information comprises the act of receiving dynamic vehicular environment sensor information; and the act of setting the priority level for the first vehicular control assistance function algorithm based on the dynamic vehicular environment information received comprises the act of setting the priority level for the first vehicular control assistance function algorithm based on the dynamic vehicular environment sensor information received; providing a second vehicular control assistance function algorithm; and setting a priority level for the second vehicular control assistance function algorithm based on the dynamic vehicular environment information received; and setting the first vehicular control assistance function algorithm and the second vehicular control assistance function algorithm in order of priority relative to one another based on the dynamic vehicular environment information received; wherein: the act of receiving the dynamic vehicular environment information comprises the act of receiving the dynamic vehicular map information; and the act of setting the priority level for the second vehicular control assistance function algorithm based on the dynamic vehicular environment information received comprises the act of setting the priority level for the second vehicular control assistance function algorithm based on the dynamic vehicular map information received; wherein: the act of receiving the dynamic vehicular environment information comprises the act of receiving the dynamic vehicular localisation information; and the act of setting the priority level for the second vehicular control assistance function algorithm based on the dynamic vehicular environment information received comprises the act of setting the priority level for the second vehicular control assistance function algorithm based on the dynamic vehicular localisation information received; wherein: the act of receiving the dynamic vehicular environment information comprises the act of receiving the dynamic vehicular environment weather information; and the act of setting the priority level for the second vehicular control assistance function algorithm based on the dynamic vehicular environment information received comprises the act of setting the priority level for the second vehicular control assistance function algorithm based on the dynamic vehicular environment weather information received; and wherein: the act of receiving the dynamic vehicular environment information comprises the act of receiving the dynamic vehicular environment sensor information; and the act of setting the priority level for the second vehicular control assistance function algorithm based on the dynamic vehicular environment information received comprises the act of setting the priority level for the second vehicular control assistance function algorithm based on the dynamic vehicular environment sensor information received.

One advantage of the vehicular control assistance method is that computer processing resources may be reserved for or allocated to a vehicular control assistance function algorithm that would be more helpful at a particular time instant or in a certain situation based on the dynamic vehicular environment information received.

In addition, advantageously, computer processing resources may be reserved for or allocated to a vehicular control assistance function algorithm that would be more helpful at a particular time instant or in a certain situation based on at least one of the dynamic vehicular map information, the dynamic vehicular localisation information, the dynamic vehicular environment weather information or the dynamic vehicular environment sensor information received.

Any feature or step disclosed in the context of the fourth aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the fourth aspect of the invention, and in the inventions generally.

Moreover, the vehicular control assistance method is distinguishable from a process that would, for example, allocate more computer processing resources to a reverse braking assist function algorithm when a reverse gear is engaged. In fact, the process would merely involve allocating more computer processing resources to a reverse braking assist function algorithm when a reverse gear is engaged, and thus would not involve taking into account dynamic vehicular environment information. Hence, the process would not achieve the advantage achievable by the vehicular control assistance method.

In this summary, in the description below, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature may also be used, to the extent possible, in combination with and/or in the context of other particular aspects and embodiments of the invention, and in the inventions generally.

In this summary, in the description below, in the claims below, and in the accompanying drawings, where reference is made herein to a method comprising two or more defined steps or acts, the defined steps or acts may be carried out in any order or simultaneously (except where the context excludes that possibility), and the method may include one or more other steps or acts which are carried out before any of the defined steps or acts, between two of the defined steps or acts, or after all the defined steps or acts (except where the context excludes that possibility).

As used in this summary, in the description below, in the claims below, and in the accompanying drawings, the term "comprises" and grammatical equivalents thereof are used herein to mean that other components, ingredients, steps, et cetera are optionally present. For example, an article "comprising" (or "which comprises") components A, B, and C may consist of (that is, contain only) components A, B, and C, or may contain not only components A B, and C but also one or more other components.

As used in this summary, in the description below, in the claims below, and in the accompanying drawings, the term "at least" followed by a number is used in to denote the start of a range beginning with that number (which may be a range having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending on the variable being defined). For example, "at most 4" means 4 or less than 4, and "at most 40%" means 40% or less than 40%. When, in this specification, a range is given as "(a first number) to (a second number)" or "(a first number) - (a second number)", this means a range whose lower limit is the first number and whose upper limit is the second number. For example, 25 to 100 mm means a range whose lower limit is 25 mm, and whose upper limit is 100 mm.

As used in this summary, in the description below, in the claims below, and in the accompanying drawings, the term "vehicular control assistance system" means a system configured to help or support a driver or a driving system to drive a vehicle. A vehicular control assistance system may be carried out by software, hardware or a combination of software and hardware.

As used in this summary, in the description below, in the claims below, and in the accompanying drawings, the term "vehicular control assistance method" means a method that is able to help or support a driver or a driving system to drive a vehicle. A vehicular control assistance method may be carried out by software, hardware or a combination of software and hardware.

As used in this summary, in the description below, in the claims below, and in the accompanying drawings, the term "vehicular control assistance function" means a task designed to help or support a driver or a driving system to drive a vehicle. A vehicular control assistance function may be carried out by software, hardware or a combination of software and hardware. Pedestrian detection and alert functions, cross traffic detection and alert functions, lane departure detection and alert functions, emergency braking function, traffic sign recognition function, headlamp assist function, reverse braking assist function and trailer assist function are examples of vehicular control assistance function.

As used in this summary, in the description below, in the claims below, and in the accompanying drawings, the term "algorithm" means a set of rules designed to perform a task, for instance, a set of rules used by a computer or a processor to perform a task. An algorithm may be configured to run on software, hardware or a combination of software and hardware. Hence, a vehicular control assistance function algorithm is a set of rules designed to perform a task designed to help or support a driver or a driving system to drive a vehicle.

As used in this summary, in the description below, in the claims below, and in the accompanying drawings, the term "priority level" means a position or rank in a scale of importance. For instance, if a higher priority level is placed on a first vehicular control assistance function algorithm than on a second vehicular control assistance function algorithm, then the first vehicular control assistance function algorithm would be of a higher priority or is more important than the second vehicular control assistance function algorithm. A priority level may, for example, be a predetermined position or rank, such as low, medium, high or critical.

As used in this summary, in the description below, in the claims below, and in the accompanying drawings, the term "dynamic vehicular environment information" means information or data related to changing or developing surroundings of a vehicle, for instance, when the vehicle is being driven. Dynamic vehicular environment information may comprise at least one of dynamic vehicular map information, dynamic vehicular localisation information, dynamic vehicular environment weather information or dynamic vehicular environment sensor information.

As used in this summary, in the description below, in the claims below, and in the accompanying drawings, the term "dynamic vehicular map information" means map information or data related to changing or developing surroundings of a vehicle, for instance, when the vehicle is being driven. Dynamic vehicular map information may comprise static map information on physical objects such as buildings, roads, traffic lights, road signs and petrol stations, obtained from a static digital map stored in a memory device or a network, such as an intranet, an extranet or the internet. Dynamic vehicular map information may also comprise dynamic map information on roadworks, accidents and the weather, obtained from the internet, vehicle-to-environment (V-to-X) communication devices or sensors in a vehicle. Dynamic vehicular map information comprising static map information and dynamic map information may be used to construct a real-world model of surroundings of a vehicle at a particular time instant or in a certain situation.

As used in this summary, in the description below, in the claims below, and in the accompanying drawings, the term "dynamic vehicular localisation information" means localisation information or data related to changing or developing surroundings of a vehicle, for instance, when the vehicle is being driven. Dynamic vehicular localisation information may comprise location or time information obtained from a global positioning system (GPS) based satellite navigation system or satellites, or direction information obtained from a compass.

As used in this summary, in the description below, in the claims below, and in the accompanying drawings, the term "dynamic vehicular environment weather information" means weather information or data related to changing or developing surroundings of a vehicle, for instance, when the vehicle is being driven.

As used in this summary, in the description below, in the claims below, and in the accompanying drawings, the term "dynamic vehicular environment sensor information" means sensor information or data related to changing or developing surroundings of a vehicle, for instance, when the vehicle is being driven. Dynamic vehicular environment sensor information may comprise sensor information from sensors such as lidar (light detection and ranging) sensors, radar (radio detection and ranging) sensors, ultrasound sensors, cameras (including infrared cameras), or combinations thereof, of a vehicle to capture data of surroundings of the vehicle at a particular time instant or in a certain situation.

As used in this summary, in the description below, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

### BRIEF DESCRIPTION OF THE DRAWINGS

These and other features, aspects, and advantages will become better understood with regard to the following description, appended claims, and accompanying drawings where:
Figure 1 shows a vehicular control assistance system;
Figure 2 shows a motor vehicle comprising the vehicular control assistance system of Figure 1; and
Figure 3 shows a diagram for a vehicular control assistance method.

In the drawings, like parts are denoted by like reference numerals.

### DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature may also be used, to the extent possible, in combination with and/or in the context of other particular aspects and embodiments of the invention, and in the inventions generally.

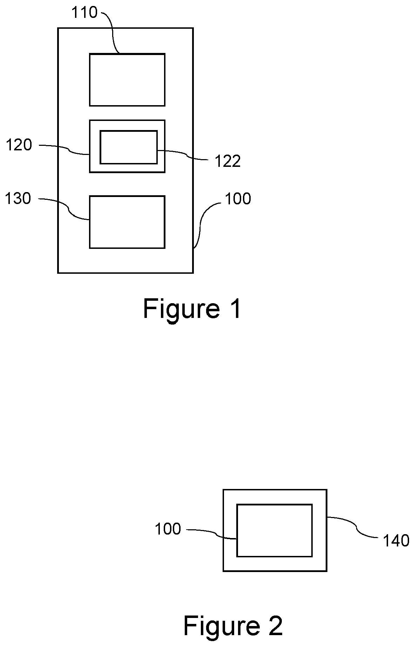

Figure 1 shows a vehicular control assistance system 100 comprising a dynamic vehicular environment information retriever 110, a vehicular control assistance function module 120 and a vehicular control assistance function priority setter 130. The vehicular control assistance system 100 may comprise software, hardware or a combination of software and hardware.

The dynamic vehicular environment information retriever 110 is configured to retrieve dynamic vehicular environment information. Hence, the dynamic vehicular environment information retriever 110 is configured to retrieve at least one of dynamic vehicular map information, dynamic vehicular localisation information, dynamic vehicular environment weather information or dynamic vehicular environment sensor information. The dynamic vehicular environment information retriever 110 may comprise software, hardware or a combination of software and hardware.

The dynamic vehicular environment information retriever 110 may retrieve dynamic vehicular map information, or map information or data related to changing or developing surroundings of a vehicle, for instance, when the vehicle is being driven. The dynamic vehicular environment information retriever 110 may retrieve static map information on physical objects such as buildings, roads, traffic lights, road signs and petrol stations, from a static digital map stored in a memory device or a network, such as an intranet, an extranet or the internet. The dynamic vehicular environment information retriever 110 may also retrieve dynamic map information on roadworks, accidents and the weather, from the internet, vehicle-to-environment (V-to-X) communication devices or sensors in a vehicle.

The dynamic vehicular environment information retriever 110 may retrieve dynamic vehicular localisation information, or localisation information or data related to changing or developing surroundings of a vehicle, for instance, when the vehicle is being driven. Hence, the dynamic vehicular environment information retriever 110 may retrieve location or time information from a global positioning system (GPS) based satellite navigation system or satellites, or direction information from a compass.

The dynamic vehicular environment information retriever 110 may retrieve dynamic vehicular environment weather information, or weather information or data related to changing or developing surroundings of a vehicle, for instance, when the vehicle is being driven. The dynamic vehicular environment information retriever 110 may retrieve dynamic vehicular environment weather information from a network, such as an intranet, an extranet, the internet, vehicle-to-environment (V-to-X) communication devices or sensors in a vehicle.

The dynamic vehicular environment information retriever 110 may retrieve dynamic vehicular environment sensor information, or sensor information or data related to changing or developing surroundings of a vehicle, for instance, when the vehicle is being driven. Hence, the dynamic vehicular environment information retriever 110 may retrieve dynamic vehicular environment sensor information from sensors such as lidar (light detection and ranging) sensors, radar (radio detection and ranging) sensors, ultrasound sensors, cameras (including infrared cameras), or combinations thereof, of a vehicle to capture data of surroundings of the vehicle at a particular time instant or in a certain situation.

The vehicular control assistance function module 120 may comprise at least one vehicular control assistance function algorithm 122, such as a pedestrian detection function algorithm, a pedestrian alert function algorithm, a cross traffic detection function algorithm, a cross traffic alert function algorithm, a lane departure detection function algorithm, a lane departure alert function algorithm, an emergency braking function algorithm, a traffic sign recognition function algorithm, a headlamp assist function algorithm, a reverse braking assist function algorithm, an electronic stability control function algorithm or a trailer assist function algorithm. The vehicular control assistance function module 120 may comprise software, hardware or a combination of software and hardware.

The vehicular control assistance function priority setter 130 is configured to set a priority level for at least one vehicular control assistance function algorithm 122 based on dynamic vehicular environment information. The vehicular control assistance function priority setter 130 is also configured to set at least two vehicular control assistance function algorithms 122 in order of priority relative to one another based on the dynamic vehicular environment information. Hence, the vehicular control assistance function priority setter 130 is configured to set a priority level for at least one vehicular control assistance function algorithm 122 or to set at least two vehicular control assistance function algorithms 122 in order of priority relative to one another based on at least one of dynamic vehicular map information, dynamic vehicular localisation information, dynamic vehicular environment weather information or dynamic vehicular environment sensor information.

The vehicular control assistance function priority setter 130 may receive dynamic vehicular environment information and determine a respective vehicular control assistance function algorithm priority score for each vehicular control assistance function algorithm 122. Then, the vehicular control assistance function priority setter 130 may set a respective priority level, for example, low, medium, high or critical, for each vehicular control assistance function algorithm 122 based on its corresponding vehicular control assistance function algorithm priority score. The vehicular control assistance function priority setter 130 may comprise software, hardware or a combination of software and hardware.

The vehicular control assistance system 100 may then allocate more computer processing resources to those vehicular control assistance function algorithms 122 with higher priority levels (for example, critical) and allocate less computer processing resources to those vehicular control assistance function algorithms 122 with lower priority levels (for example, low).

For instance, if dynamic vehicular environment information indicates that a vehicle is travelling at a high speed along a sandy path in a rural area on a bright sunny day, the vehicular control assistance function priority setter 130 may set low priority levels for a lane departure alert function algorithm, a trailer assist function algorithm, a reverse braking assist function algorithm and a traffic sign recognition function algorithm, and set a high priority level for an electronic stability control function algorithm.

Figure 2 shows a motor vehicle 140 comprising the vehicular control assistance system 100. The motor vehicle 140 may be a car.

One advantage of the vehicular control assistance system 100 is that computer processing resources may be reserved for or allocated to a vehicular control assistance function algorithm 122 that would be more helpful at a particular time instant or in a certain situation based on dynamic vehicular environment information.

In addition, advantageously, computer processing resources may be reserved for or allocated to a vehicular control assistance function algorithm 122 that would be more helpful at a particular time instant or in a certain situation based on at least one of dynamic vehicular map information, dynamic vehicular localisation information, dynamic vehicular environment weather information or dynamic vehicular environment sensor information.

Moreover, the vehicular control assistance system 100 is distinguishable from a device that is configured to, for example, allocate more computer processing resources to a reverse braking assist function algorithm when a reverse gear is engaged. In fact, the device is merely pre-programmed to allocate more computer processing resources to a reverse braking assist function algorithm when a reverse gear is engaged, and thus no dynamic vehicular environment information is taken into account. Hence, the device would not achieve the advantage of the vehicular control assistance system 100.

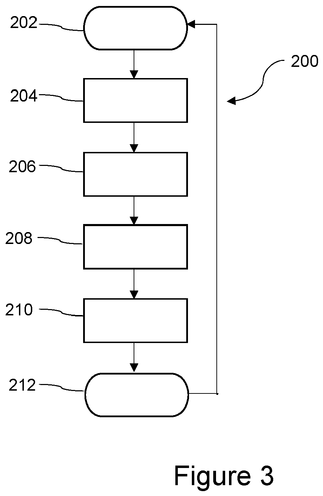

Figure 3 shows a diagram for a vehicular control assistance method 200 using the vehicular control assistance system 100.

At step 202, the vehicular control assistance method 200 begins. At step 204, the dynamic vehicular environment information retriever 110 retrieves dynamic vehicular environment information. At step 206, the vehicular control assistance function priority setter 130 determines a respective vehicular control assistance function algorithm priority score for each vehicular control assistance function algorithm 122 based on the dynamic vehicular environment information received. At step 208, the vehicular control assistance function priority setter 130 sets a respective priority level, for example, low, medium, high or critical, for each vehicular control assistance function algorithm 122 based on its corresponding vehicular control assistance function algorithm priority score determined from the dynamic vehicular environment information received. At step 210, the vehicular control assistance system 100 allocates more computer processing resources to those vehicular control assistance function algorithms 122 with higher priority levels (for example, critical) and allocates less computer processing resources to those vehicular control assistance function algorithms 122 with lower priority levels (for example, low). Finally, at step 212, the vehicular control assistance method 200 ends. However, it is to be understood that the vehicular control assistance method 200 illustrated in a sequential plurality of steps in Figure 3 merely illustrates the vehicular control assistance method 200 as applied to a particular time instance. Hence, step 212 may loop back to step 202 to perform the vehicular control assistance method 200 again.

One advantage of the vehicular control assistance method 200 is that computer processing resources may be reserved for or allocated to a vehicular control assistance function algorithm 122 that would be more helpful at a particular time instant or in a certain situation based on dynamic vehicular environment information received.

In addition, advantageously, computer processing resources may be reserved for or allocated to a vehicular control assistance function algorithm 122 that would be more helpful at a particular time instant or in a certain situation based on at least one of dynamic vehicular map information, dynamic vehicular localisation information, dynamic vehicular environment weather information or dynamic vehicular environment sensor information received.

Moreover, the vehicular control assistance method 200 is distinguishable from a process that would, for example, allocate more computer processing resources to a reverse braking assist function algorithm when a reverse gear is engaged. In fact, the process would merely involve allocating more computer processing resources to a reverse braking assist function algorithm when a reverse gear is engaged, and thus would not involve taking into account dynamic vehicular environment information. Hence, the process would not achieve the advantage achievable by the vehicular control assistance method 200.

Although the invention has been described in considerable detail with reference to certain embodiments or aspects, other embodiments or aspects are possible.

For example, other types of information may be retrieved by the vehicular control assistance system 100.

Therefore, the spirit and scope of the appended claims should not be limited to the description of the embodiments contained herein.

All features disclosed in this specification (including the appended claims, abstract, and accompanying drawings) may be replaced by alternative features serving the same, equivalent, or similar purpose, unless expressly stated otherwise. Thus, unless expressly stated otherwise, each feature disclosed is one example only of a generic series of equivalent or similar features.

## Claims

1. A vehicular control assistance system (100) comprising:
a vehicular control assistance function module (120) comprising a first vehicular control assistance function algorithm (122); and
a vehicular control assistance function priority setter (130) configured to set a priority level for the first vehicular control assistance function algorithm (122) based on dynamic vehicular environment information.

2. The vehicular control assistance system (100) as in claim 1, wherein the vehicular control assistance function priority setter (130) is configured to set the priority level for the first vehicular control assistance function algorithm (122) based on at least one of:
dynamic vehicular map information;
dynamic vehicular localisation information;
dynamic vehicular environment weather information; or
dynamic vehicular environment sensor information.

3. The vehicular control assistance system (100) as in claim 2, wherein:
the vehicular control assistance function module (120) comprises a second vehicular control assistance function algorithm (122); and
the vehicular control assistance function priority setter (130) is configured to set a priority level for the second vehicular control assistance function algorithm (122) based on the dynamic vehicular environment information.

4. The vehicular control assistance system (100) as in claim 3, wherein the vehicular control assistance function priority setter (130) is configured to set the priority level for the second vehicular control assistance function algorithm (122) based on at least one of:
the dynamic vehicular map information;
the dynamic vehicular localisation information;
the dynamic vehicular environment weather information; or
the dynamic vehicular environment sensor information.

5. The vehicular control assistance system (100) as in claim 1, wherein:
the vehicular control assistance function module (120) comprises a second vehicular control assistance function algorithm (122); and
the vehicular control assistance function priority setter (130) is configured to set a priority level for the second vehicular control assistance function algorithm (122) based on the dynamic vehicular environment information.

6. The vehicular control assistance system (100) as in claim 5, wherein the vehicular control assistance function priority setter (130) is configured to set the priority level for the second vehicular control assistance function algorithm (122) based on at least one of:
dynamic vehicular map information;
dynamic vehicular localisation information;
dynamic vehicular environment weather information; or
dynamic vehicular environment sensor information.

7. The vehicular control assistance system (100) as in any one of claims 3-6, wherein the vehicular control assistance function priority setter (130) is configured to set the first vehicular control assistance function algorithm (122) and the second vehicular control assistance function algorithm (122) in order of priority relative to one another based on the dynamic vehicular environment information.

8. A motor vehicle (140) comprising the vehicular control assistance system (100) as in any one of the preceding claims.

9. A vehicular control assistance system (100) comprising:
a vehicular control assistance function module (120) comprising a first vehicular control assistance function algorithm (122); and
a vehicular control assistance function priority setter (130) configured to set a priority level for the first vehicular control assistance function algorithm (122) based on dynamic vehicular environment information;
wherein:
the vehicular control assistance function module (120) comprises a second vehicular control assistance function algorithm (122); and
the vehicular control assistance function priority setter (130) is configured to set a priority level for the second vehicular control assistance function algorithm (122) based on the dynamic vehicular environment information;
wherein the vehicular control assistance function priority setter (130) is configured to set the first vehicular control assistance function algorithm (122) and the second vehicular control assistance function algorithm (122) in order of priority relative to one another based on the dynamic vehicular environment information;
wherein the vehicular control assistance function priority setter (130) is configured to set the priority level for the first vehicular control assistance function algorithm (122) based on at least one of:
dynamic vehicular map information;
dynamic vehicular localisation information;
dynamic vehicular environment weather information; or
dynamic vehicular environment sensor information; and
wherein the vehicular control assistance function priority setter (130) is configured to set the priority level for the second vehicular control assistance function algorithm (122) based on at least one of:
the dynamic vehicular map information;
the dynamic vehicular localisation information;
the dynamic vehicular environment weather information; or
the dynamic vehicular environment sensor information.

10. A vehicular control assistance method comprising the acts of:
receiving dynamic vehicular environment information;
providing a first vehicular control assistance function algorithm (122); and
setting a priority level for the first vehicular control assistance function algorithm (122) based on the dynamic vehicular environment information received.

11. The vehicular control assistance method (200) as in claim 10, wherein:
the act of receiving the dynamic vehicular environment information comprises the act of receiving dynamic vehicular map information; and
the act of setting the priority level for the first vehicular control assistance function algorithm (122) based on the dynamic vehicular environment information received comprises the act of setting the priority level for the first vehicular control assistance function algorithm (122) based on the dynamic vehicular map information received.

12. The vehicular control assistance method (200) as in any one of claims 10-11, wherein:
the act of receiving the dynamic vehicular environment information comprises the act of receiving dynamic vehicular localisation information; and
the act of setting the priority level for the first vehicular control assistance function algorithm (122) based on the dynamic vehicular environment information received comprises the act of setting the priority level for the first vehicular control assistance function algorithm (122) based on the dynamic vehicular localisation information received.

13. The vehicular control assistance method (200) as in any one of claims 10-12, wherein:
the act of receiving the dynamic vehicular environment information comprises the act of receiving dynamic vehicular environment weather information; and
the act of setting the priority level for the first vehicular control assistance function algorithm (122) based on the dynamic vehicular environment information received comprises the act of setting the priority level for the first vehicular control assistance function algorithm (122) based on the dynamic vehicular environment weather information received.

14. The vehicular control assistance method (200) as in any one of claims 10-13, wherein:
the act of receiving the dynamic vehicular environment information comprises the act of receiving dynamic vehicular environment sensor information; and
the act of setting the priority level for the first vehicular control assistance function algorithm (122) based on the dynamic vehicular environment information received comprises the act of setting the priority level for the first vehicular control assistance function algorithm (122) based on the dynamic vehicular environment sensor information received.

15. The vehicular control assistance method (200) as in any one of claims 10-14, further comprising the acts of:
providing a second vehicular control assistance function algorithm (122); and
setting a priority level for the second vehicular control assistance function algorithm (122) based on the dynamic vehicular environment information received.

16. The vehicular control assistance method (200) as in claim 15, further comprising the act of setting the first vehicular control assistance function algorithm (122) and the second vehicular control assistance function algorithm (122) in order of priority relative to one another based on the dynamic vehicular environment information received.

17. A vehicular control assistance method (200) comprising the acts of:
receiving dynamic vehicular environment information;
providing a first vehicular control assistance function algorithm (122);
setting a priority level for the first vehicular control assistance function algorithm (122) based on the dynamic vehicular environment information received;
wherein:
the act of receiving the dynamic vehicular environment information comprises the act of receiving dynamic vehicular map information; and
the act of setting the priority level for the first vehicular control assistance function algorithm (122) based on the dynamic vehicular environment information received comprises the act of setting the priority level for the first vehicular control assistance function algorithm (122) based on the dynamic vehicular map information received;
wherein:
the act of receiving the dynamic vehicular environment information comprises the act of receiving dynamic vehicular localisation information; and
the act of setting the priority level for the first vehicular control assistance function algorithm (122) based on the dynamic vehicular environment information received comprises the act of setting the priority level for the first vehicular control assistance function algorithm (122) based on the dynamic vehicular localisation information received;
wherein:
the act of receiving the dynamic vehicular environment information comprises the act of receiving dynamic vehicular environment weather information; and
the act of setting the priority level for the first vehicular control assistance function algorithm (122) based on the dynamic vehicular environment information received comprises the act of setting the priority level for the first vehicular control assistance function algorithm (122) based on the dynamic vehicular environment weather information received;
wherein:
the act of receiving the dynamic vehicular environment information comprises the act of receiving dynamic vehicular environment sensor information; and
the act of setting the priority level for the first vehicular control assistance function algorithm (122) based on the dynamic vehicular environment information received comprises the act of setting the priority level for the first vehicular control assistance function algorithm (122) based on the dynamic vehicular environment sensor information received;
providing a second vehicular control assistance function algorithm (122); and
setting a priority level for the second vehicular control assistance function algorithm (122) based on the dynamic vehicular environment information received; and
setting the first vehicular control assistance function algorithm (122) and the second vehicular control assistance function algorithm (122) in order of priority relative to one another based on the dynamic vehicular environment information received;
wherein:
the act of receiving the dynamic vehicular environment information comprises the act of receiving the dynamic vehicular map information; and
the act of setting the priority level for the second vehicular control assistance function algorithm (122) based on the dynamic vehicular environment information received comprises the act of setting the priority level for the second vehicular control assistance function algorithm (122) based on the dynamic vehicular map information received;
wherein:
the act of receiving the dynamic vehicular environment information comprises the act of receiving the dynamic vehicular localisation information; and
the act of setting the priority level for the second vehicular control assistance function algorithm (122) based on the dynamic vehicular environment information received comprises the act of setting the priority level for the second vehicular control assistance function algorithm (122) based on the dynamic vehicular localisation information received;
wherein:
the act of receiving the dynamic vehicular environment information comprises the act of receiving the dynamic vehicular environment weather information; and
the act of setting the priority level for the second vehicular control assistance function algorithm (122) based on the dynamic vehicular environment information received comprises the act of setting the priority level for the second vehicular control assistance function algorithm (122) based on the dynamic vehicular environment weather information received; and
wherein:
the act of receiving the dynamic vehicular environment information comprises the act of receiving the dynamic vehicular environment sensor information; and
the act of setting the priority level for the second vehicular control assistance function algorithm (122) based on the dynamic vehicular environment information received comprises the act of setting the priority level for the second vehicular control assistance function algorithm (122) based on the dynamic vehicular environment sensor information received.
